# DEMANDE DE BREVET EUROPEEN

(11) **EP 0 642 241 A1**
(43) Date de publication de la demande: **08.03.1995**
(21) Numéro de dépôt: 94401933.0
(22) Date de dépôt: 31.08.1994
(51) Int. Cl.: H04J 3/16, H04B 7/26

(54) **Transmission de messages au moyen d'une trame de longueur variable**

(30) Priorité: 03.09.1993 FR 9310531
(71) Demandeur: ALCATEL MOBILE COMMUNICATION FRANCE, 75008 Paris (FR)
(72) Inventeur: Dupuy, Pierre, F-75017 Paris (FR); Cruchant, Laurent, F-92500 Rueil Malmaison (FR)
(74) Mandataire: Fournier, Michel

(57) **Abrégé**

L'invention concerne un émetteur transmettant des blocs à un récepteur au moyen de trames formées d'une ligne de verrouillage et de lignes de données, et recevant un acquittement de ce récepteur émis par celui-ci à la reconnaissance d'une ligne de verrouillage. Un bloc comprenant des bits de commande (C1 à C4), des bits d'information (d1 à d125) et des bits d'adaptation (C5 à C11), durant une première phase précédant la réception de cet acquittement le récepteur transmet des blocs dans lesquels les bits d'adaptation (C5 à C11) ont été supprimés au moyen de trames réduites comprenant un nombre initial de lignes de données et, durant une seconde phase faisant suite à la réception de cet acquittement il transmet des blocs incorporant ces bits d'adaptation (C5 à C11) au moyen de trames complètes comprenant un nombre terminal de lignes de données qui est supérieur à ce nombre initial.

L'invention concerne également un récepteur adapté à la réception de blocs émis par un tel émetteur, ce récepteur comprenant des moyens d'analyse pour déterminer si les blocs reçus sont supportés par une trame réduite ou par une trame complète afin d'identifier la nature de ces blocs.

## Description

Dans un système de communication synchrone entre équipements de traitement de données, une des méthodes les plus couramment utilisées pour envoyer des messages consiste à définir une structure de trame caractérisée par
- un drapeau de synchronisation,
- un codage particulier des informations utiles à transmettre, tel que le drapeau de synchronisation ne puisse jamais être reconnu au milieu du train de données transmises.

Une des façons les plus connues pour mettre en oeuvre ce procédé consiste choisir un drapeau qui est une suite constante de P zéros suivis d'un '1'. Le codage de l'information consiste alors simplement à insérer un '1' chaque fois qu'une suite de (P-1) '0' a été transmise. Par exemple, si le drapeau est '00001' le message '0010 0000 10' sera transmis sous la forme : '00001 0010 00100 10'. Les chiffres soulignés correspondent au drapeau de synchronisation, et au '1' inséré (les espaces n'ont pas d'autre rôle que de faciliter la lecture).

Cette méthode souffre toutefois d'un défaut : le temps de transmission d'un message dépend de son contenu, ce qui est très gênant lorsqu'on souhaite assurer un délai fixe d'acheminement.

La solution connue à ce problème consiste à insérer un '1' tous les (P-1) bits d'information transmis : on est ainsi sûr qu'on ne rencontrera jamais P zéros successifs et le temps de transmission est toujours le même quel que soit l'information à transmettre. Un exemple bien connu de ce procédé est celui des trames V110 définies par le CCITT (Comité Consultatif International du Téléphone et du Télégraphe). Elle sont constituées d'un drapeau de huit zéros suivi d'un '1', un '1' étant ensuite inséré tous les 7 bits pour former une trame de 80 bits, 17 bits étant utilisés pour la synchronisation et 63 pour les informations.

On peut ainsi représenter une trame par un tableau à P colonnes et L lignes. la première ligne que l'on conviendra d'appeler ligne de verrouillage comporte P zéros et les lignes suivantes que l'on nomme lignes de données comprennent chacune un bit d'en-tête qui vaut '1' suivi de (P-1) bits d'informations.

On définit communément le débit brut comme le nombre de bits de la trame transmis par unité de temps et il est donc proportionnel à P.L. On définit également de débit utile comme de nombre de bits d'information de la trame transmis pendant la même unité de temps et il est donc proportionnel à (P-1).(L-1). Si l'on caractérise l'efficacité de la transmission, celle-ci vaut le rapport du débit utile au débit brut, soit (P-1).(L-1)/ P.L.

Il apparaît ainsi que l'efficacité sera d'autant meilleure que la trame sera longue c'est-à-dire que le produit du nombre de colonnes par le nombre de lignes P.L sera important.

Cette structure de trame est utilisée pour acheminer des messages entre un premier équipement que l'on qualifiera d'émetteur et un second équipement que l'on qualifiera de récepteur. Or, le récepteur est mis en service à un moment aléatoire si bien que le temps de reconnaissance du début d'un message, c'est-à-dire de la ligne de verrouillage, est lié à la longueur de la trame; ce temps de reconnaissance vaut en moyenne la durée d'une demi-trame.

Il apparaît ainsi que lorsque l'on souhaite augmenter l'efficacité de la transmission, il faut allonger la trame, ce qui a pour effet d'augmenter le temps de reconnaissance. Ce n'est pas souhaitable car ce temps de reconnaissance conditionne toute la procédure de transmission, notamment la synchronisation du récepteur. Si, par ailleurs, ce récepteur doit également émettre des messages à destination de l'émetteur, il ne le fera généralement qu'à l'issue de la synchronisation.

La solution connue consiste à démarrer la transmission en envoyant des trames spéciales de synchronisation. Il s'agit de trames très courtes dont le rôle est le suivant : l'émetteur commence à émettre ces trames et attend une réponse du récepteur. Dès que le récepteur commence à recevoir ces trames de synchronisation, il envoie un message normal qui sert d'acquittement de la trame de synchronisation. L'émetteur peut alors commencer à envoyer des trames longues, le récepteur étant prêt à les recevoir sans délai.

Le défaut de cette méthode, outre qu'elle est compliquée à mettre en oeuvre, est que cette phase d'établissement de synchronisation prend du temps : le drapeau de synchronisation doit être entièrement transmis, reçu et interprété par le récepteur avant qu'il ne réponde. L'émetteur doit alors passer en mode de communication normale, ce qui peut ne pas être immédiat s'il doit simplement retransmettre des messages qui lui arrivent synchronisés : il devra alors attendre le prochain message reçu avant de pouvoir le transmettre. Si par exemple il reçoit des messages aux instant T 2T .....nT, l'arrivée de l'acquittement entre T et 2T imposera d'attendre jusqu'à 2T avant de pouvoir entreprendre une transmission : on voit que le délai de reconnaissance de synchronisation peur entraîner un retard beaucoup plus important que ce simple délai.

Cette solution n'est donc pas satisfaisante.

La présente invention a ainsi pour objet une structure de trame qui permet d'acheminer des messages avec une bonne efficacité de transmission tout en conservant le temps de reconnaissance de ces messages dans des limites acceptables.

De manière connue, un émetteur transmet des blocs à un récepteur au moyen de trames formées d'une ligne de verrouillage et de lignes de données, il reçoit un acquittement du récepteur émis par celui-ci à la reconnaissance d'une ligne de verrouillage, et selon l'invention, un bloc comprenant des bits de commande, des bits d'information et des bits d'adaptation, durant une première phase précédant la réception de cet acquittement cet émetteur transmet des blocs dans lesquels ces bits d'adaptation ont été supprimés au moyen de trames réduites comprenant un nombre initial de lignes de données et, durant une seconde phase faisant suite à la réception de cet acquittement il transmet des blocs incorporant ces bits d'adaptation au moyen de trames complètes comprenant un nombre terminal de lignes de données qui est supérieur à ce nombre initial.

De plus, les bits d'information étant structurés en paquets, l'émetteur transmet un paquet par trame durant la première phase et deux paquets par trame au moins durant la deuxième phase.

En outre, certains des bits de commande étant communs aux deux paquets transmis durant la deuxième phase, ils ne sont transmis qu'une fois durant cette phase.

Selon une caractéristique additionnelle, les bits d'adaptation sont des bits de contrôle du récepteur que celui-ci ne peut utiliser qu'au cours de la deuxième phase.

Avantageusement, ces bits d'adaptation comprennent une information d'alignement temporel.

Ou bien alors, ces bits d'adaptation représentent les bits d'importance secondaire d'un paquet tandis que les bits d'information représentent les bits d'importance prépondérante de ce paquet.

L'invention concerne également un récepteur adapté à la réception de blocs émis par un émetteur tel que défini ci-dessus, ce récepteur comprenant des moyens d'analyse pour déterminer si ces blocs sont supportés par une trame réduite ou par une trame complète afin d'identifier la nature de ces blocs.

L'invention apparaîtra maintenant de manière plus précise dans le cadre de la description d'un exemple de réalisation donné à titre indicatif en se référant aux figures annexées qui représentent :
- la figure 1, un exemple de trame de l'état de la technique,
- la figure 2, divisée en deux parties 2A et 2B pour la clarté de la présentation, un exemple de trame selon l'invention.

On présentera maintenant un exemple de réalisation de l'invention en connexion avec le système de rédiocommmunication GSM où le problème posé apparaît de manière particulièrement claire dans le cas de la transmission de la parole à demi-débit.

En effet, dans ce système la parole codée à plein débit (13 kbits/s) doit faire l'objet d'un transcodage avant son traitement ultérieur, dans le réseau public commuté, par exemple. Il est donc prévu un transcodeur qui reçoit des paquets de parole codée en provenance d'une station de base au rythme d'un toutes les 20 milisecondes.

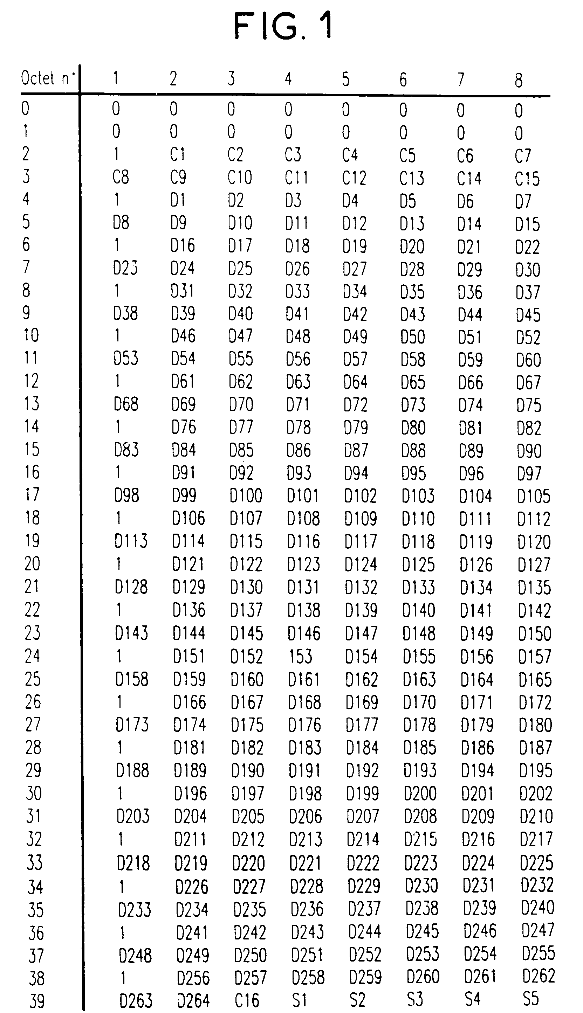

En référence à la recommandation GSM 08.60 version 3.1.1, ces paquets de 264 bits d'information sont acheminés au moyen de trames à 16 colonnes et 20 lignes, comme représenté à la figure 1. Ces lignes étant formées de 16 bits, soit 2 octets, pour simplifier la présentation, on a choisi de représenter un octet par ligne sur la figure si bien qu'une ligne de la trame s'étend sur deux lignes consécutives de cette figure.

La première ligne qui est la ligne de verrouillage comprend 16 bits à zéro. Chacune des lignes suivantes est une ligne de données et commence par un bit d'en-tête qui vaut '1'. La première ligne de données comprend 15 bits de commande C1 à C15. Les lignes de données 2 à 18 comprennent chacune 15 bits d'information D1 à D15, D16 à D30, ..., D241 à D255. La dix-neuvième et dernière ligne de données comprend des bits d'information D256 à 264, puis à nouveau un bit de commande C16 et enfin des bits de réserve S1 à S5.

Par ailleurs, le GSM prévoit également que la parole fasse l'objet d'un codage à demi-débit (approximativement 6,5 kbits/s) et on fait l'hypothèse qu'un paquet de parole codée comprend dans ce cas 125 bits d'information d1 à d125.

Il vient naturellement à l'idée de multiplexer deux paquets codés à demi-débit pour les acheminer au moyen de la trame utilisée pour un paquet à plein débit, ceci dans le souci d'économiser des liens de transmission entre la station de base et le transcodeur.

On va donc définir une trame demi-débit dont la longueur vaut la moitié de celle de la trame utilisée pour le plein débit.

Cette trame demi-débit comporte 8 colonnes et 20 lignes, la première ligne qui est la ligne de verrouillage comprenant huit zéros et chacune des 19 lignes suivantes, les lignes de données, commençant par un bit d'en-tête qui vaut '1'. La ligne de verrouillage et les bits d'en-tête représentent les bits de synchronisation qui sont au nombre de 27. On admet que les bits de commande C1 à C16 prévus pour le plein débit sont également nécessaires pour le demi-débit. Il s'ensuit qu'il reste seulement 117 bits au lieu des 125 prévus pour l'acheminement d'un paquet demi-débit.

Il convient donc d'augmenter l'efficacité de transmission. Pour ce faire, on définit une nouvelle trame de longueur double de la trame demi-débit pour acheminer deux paquets demi-débit.

On suppose de plus que les bits de commande C1 à C16 sont communs pour ces deux paquets, si bien qu'ils doivent figurer une seule fois dans cette nouvelle trame.

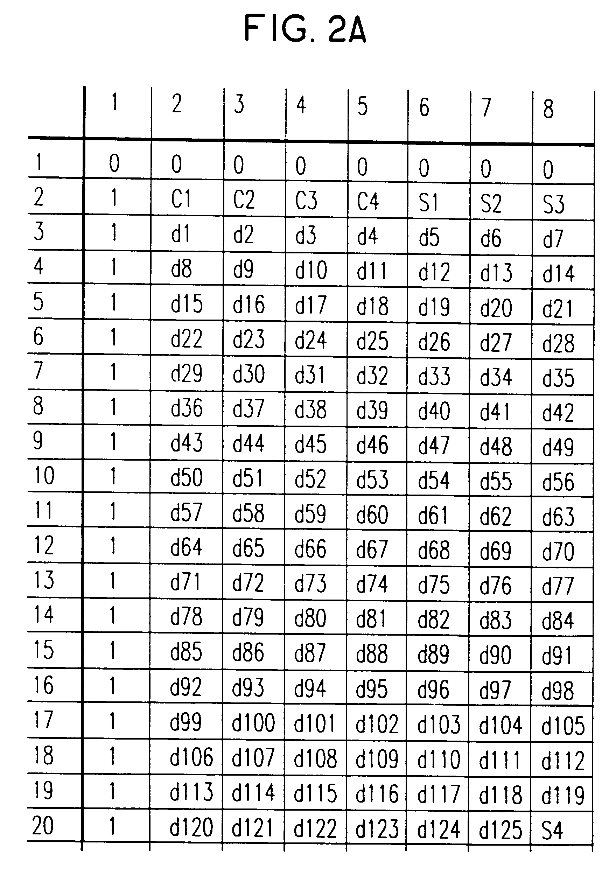

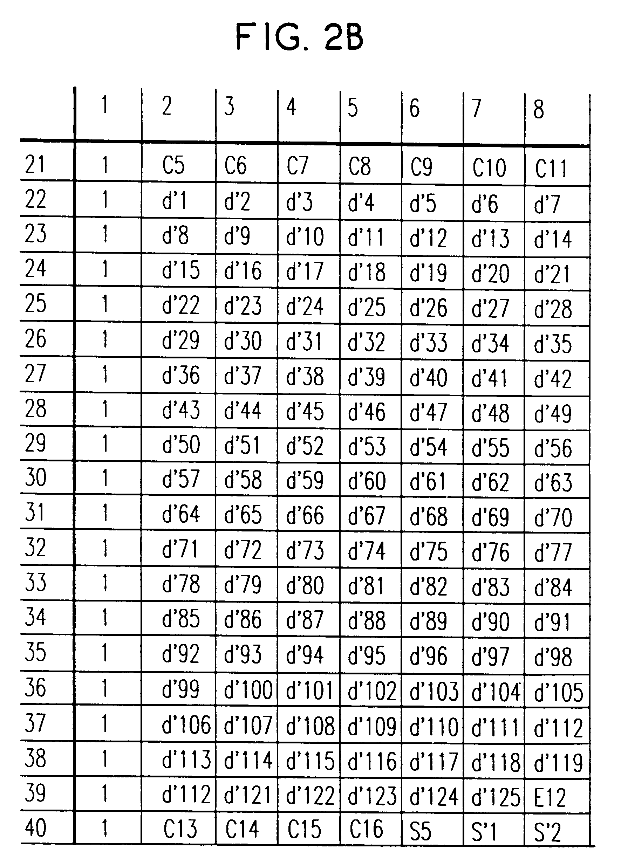

En référence à la figure 2, cette nouvelle trame comporte 8 colonnes et 40 lignes. La première ligne ou ligne de verrouillage comprend 8 bits à zéro. Les lignes de données commencent toutes par un bit d'en tête à '1'. La première ligne de données comprend les quatre premiers bits de commande C1 à C4 ainsi que les trois premiers bits de réserve S1 à S3. Les bits d'information d1 à d125 d'un paquet demi-débit sont placés sur les lignes de données 2 à 19, et la dix-neuvième est complétée par le quatrième bit de réserve S4. La vingtième ligne de données est utilisée pour les bits de commande C5 à C11. les bits d'information d'1 à d'125 d'un deuxième paquet demi-débit sont placés sur les lignes de données 21 à 38 et la trente-huitième est complétée par le douzième bit de commande C12. La dernière ligne de données comprend les derniers bits de commande C13 à C16, le dernier bit de réserve S5 ainsi que deux bits de réserve supplémentaires S'1, S'2.

Cette nouvelle trame permet donc bien de multiplexer deux paquets demi-débit dans un format compatible avec celui d'un paquet plein débit. Cependant, sa durée est double de celle d'une trame plein-débit si bien que le temps de reconnaissance d'une ligne de verrouillage dans le transcodeur est augmenté en conséquence, comme cela a déjà été précisé.

L'invention se propose de remédier à cet inconvénient comme suit, compte-tenu du fait que seuls les quatre premiers bits de commande C1 à C4 sont nécessaires pour le démarrage du transcodeur. Ces bits précisent la nature du paquet de bits d'informations figurant dans la trame, demi-débit ou plein débit par exemple.

Dans un premier temps, la station de base que l'on considérera comme un émetteur émet des trames réduites qui comportent uniquement les 20 premières lignes de la nouvelle trame représentée dans la figure 2.

Cette trame réduite permet bien de respecter le débit souhaité car elle véhicule un paquet demi-débit dans son intégralité. Le transcodeur que l'on considérera comme un récepteur va rechercher la ligne de verrouillage dès qu'il est mis en service. Lorsque cette ligne est reconnue, il sait identifier les bits de commande C1 à C4 qui lui indiquent la nature du traitement à effectuer. Le récepteur peut dès lors envoyer un acquittement à l'émetteur lui précisant qu'il est synchronisé sur la trame réduite. A titre d'exemple, cet acquittement peut consister en une suite de trames du même type que celle émise par l'émetteur, notamment si la liaison station de base transcodeur est bidirectionnelle.

Dans un deuxième temps, à la réception de cet acquittement, l'émetteur produit non plus des trames réduites mais des trames complètes telles que représentées à la figure 2.

Le récepteur comprend des moyens d'analyse pour analyser le cortenu de la vingtième ligne qui suit une ligne de verrouillage.

Si cette ligne est composée uniquement de bits à zéro, il faut considérer qu'il s'agit d'une trame réduite.

Si cette ligne comporte au moins un bit à '1', il faut considérer qu'il s'agit là de la suite d'une trame réduite, soit de la deuxième moitié d'une nouvelle trame telle que définie plus haut.

Dans ce cas, les bits de commande C5 à C11 figurent de la deuxième à la huitième position de cette ligne.

A titre d'exemple, ils représentent une référence d'alignement temporel que le transcodeur doit adopter pour émettre ces propres trames à destination de la station de base. On remarque à posteriori que le transcodeur n'a pas besoin de cette information tant qu'il n'est pas synchronisé, c'est à dire tant qu'il n'a pas reconnu une ligne de verrouillage.

D'autre part, on envisagera également le cas de la procédure connue sous le terme anglais de "handover". Dans ce cas, le transcodeur qui recevait des trames d'une première station de base est amené à recevoir par le même canal des trames d'une deuxième station de base si bien qu'il peut ne pas avoir obtenu la synchronisation sur cette deuxième station de base et continuer à émettre ses propres trames à destination de celle-ci. La seconde station de base pourrait alors interpréter cette émission comme un acquittement. A cet effet, on prévoit que le transcodeur émette une information précisant qu'il n'est plus synchronisé sur une trame complète, ceci au moyen d'un bit spécifique, par exemple. On comprend bien que le terme d'acquittement doit être pris dans son acception la plus générale.

L'invention a été présentée au moyen d'un cas concret afin d'en faciliter la compréhension.

Elle s'applique dans les cas les plus divers de transmission d'un bloc de données entre un émetteur et un récepteur pourvu que ce bloc comprenne des bits d'adaptation qui ne sont pas strictement nécessaires au début de la transmission.

Dans l'exemple de réalisation précédent figurent notamment parmi ces bits d'adaptation les bits de commande C5 à C11 qui précisent une référence d'alignement temporel.

On peut imaginer bien d'autres cas et on peut penser notamment au codage de la parole employé dans le GSM.

Ce codage produit en effet un bloc de bits dans lequel certains bits ont une grande importance tandis que d'autres sont utilisés pour transmettre de simples nuances, ils sont donc d'importance secondaire. On peut tolérer que ces bits d'importance secondaire ne soient pas acheminés au début de la transmission, qu'ils soient donc considérés comme des bits d'adaptation.

Cette notion de bits d'importance prépondérante et de bits d'importance secondaire n'est évidemment pas limitée au cas de la parole.

Par ailleurs, l'homme du métier comprend bien que l'invention s'applique quelle que soit la relation qui lie la trame réduite et la trame complète pourvu que cette relation soit déterminée et connue du récepteur. Le fait que la trame complète ait une longueur double de la trame réduite a été choisi dans l'exemple décrit en raison de sa simplicité.

## Revendications

**1)** Emetteur transmettant des blocs à un récepteur au moyen de trames formées d'une ligne de verrouillage et de lignes de données, recevant un acquittement dudit récepteur émis par celui-ci à la reconnaissance d'une ligne de verrouillage, caractérisé en ce que, un bloc comprenant des bits de commande (C1 à C4), des bits d'information (d1 à d125) et des bits d'adaptation (C5 à C11), durant une première phase précédant la réception dudit acquittement il transmet des blocs dans lesquels lesdits bits d'adaptation (C5 à C11) ont été supprimés au moyen de trames réduites comprenant un nombre initial de lignes de données et, durant une seconde phase faisant suite à la réception dudit acquittement il transmet des blocs incorporant lesdits bits d'adaptation (C5 à C11) au moyen de trames complètes comprenant un nombre terminal de lignes de données qui est supérieur audit nombre initial.

**2)** Emetteur selon la revendication 1, caractérisé en ce que lesdits bits d'information étant structurés en paquets, il transmet un paquet (d1 à d125) par trame durant ladite première phase et deux paquets (d1 à d125, d'1 à d'125) par trame au moins durant ladite deuxième phase.

**3)** Emetteur selon la revendication 2 caractérisé en ce que, certains desdits bits de commande (C1 à C4) étant communs auxdits deux paquets transmis durant la deuxième phase, ils ne sont transmis qu'une fois durant cette phase.

**4)** Emetteur selon l'une quelconque des revendications 1 à 3, caractérisé en ce que lesdits bits d'adaptation (C5 à C11) sont des bits de contrôle dudit récepteur que celui-ci ne peut utiliser qu'au cours de la deuxième phase.

**5)** Emetteur selon la revendication 4 caractérisé en ce que ces bits d'adaptation comprennent une information d'alignement temporel.

**6)** Emetteur, selon l'une quelconque des revendications 2 ou 3, caractérisé en ce que lesdits bits d'adaptation représentent les bits d'importance secondaire d'un paquet tandis que lesdits bits d'information représentent les bits d'importance prépondérante de ce paquet.

**7)** Récepteur adapté à la réception de blocs émis par un émetteur selon l'une quelconque des revendications précédentes, caractérisé en ce qu'il comprend des moyens d'analyse pour déterminer si ces blocs sont supportés par une trame réduite ou par une trame complète afin d'identifier la nature de ces blocs.
